# EUROPÄISCHE PATENTSCHRIFT

(11) **EP 0 961 045 B1**
(45) Veröffentlichungstag und Bekanntmachung des Hinweises auf die Patenterteilung: **11.05.2005**
(21) Anmeldenummer: 99110128.8
(22) Anmeldetag: 25.05.1999
(51) Int. Cl.: F16C 33/38, F16C 33/42, F16C 33/50

(54) **Wälzkörperkette**
Chain cage for rolling members
Cage en forme de chaîne pour éléments de roulement

(30) Priorität: 29.05.1998 DE 19824250
(43) Veröffentlichungstag der Anmeldung: 01.12.1999
(73) Patentinhaber: Rexroth Star GmbH, 97424 Schweinfurt (DE)
(72) Erfinder: Blaurock, Günter, Dipl.-Ing., 97464 Niederwerrn (DE); Pfeuffer, Viktor, Dipl.-Ing., 97072 Würzburg (DE)
(74) Vertreter: Herzog, Markus, Dipl.-Phys. Dr.

(56) Entgegenhaltungen:
- DE-A- 3 709 039
- DE-C- 4 229 136
- US-A- 2 557 476
- US-A- 2 566 421
- US-A- 2 897 021
- US-A- 3 486 212
- PATENT ABSTRACTS OF JAPAN vol. 017, no. 633 (M-1513), 24. November 1993 (1993-11-24) & JP 05 196037 A (T H K KK), 6. August 1993 (1993-08-06)

## Beschreibung

Die Erfindung betrifft eine Wälzkörperkette mit den Merkmalen des Oberbegriffs von Anspruch 1, wie sie aus der JP-A-5- 196 037 bekannt sind.

Eine derartige Wälzkörperkette ist beispielsweise aus der japanischen Patent-Offenlegungsschrift 5-52217 (1993) zu der japanischen Patentanmeldung 3-235563 (1991) bekannt. Die bekannte Wälzkörperkette umfaßt eine Mehrzahl von Kugeln, die in Ausnehmungen eines Trägerbands angeordnet sind. Zwischen jeweils zwei aufeinanderfolgenden Kugeln ist ein Halteelement angeordnet, das auf seinen in Langsrichtung des Trägerbands vorauslaufenden bzw. nachlaufenden Seiten jeweils eine Haltefläche zum gleitenden Eingriff mit der vorauslaufenden bzw. nachlaufenden Kugel aufweist. Die Halteelemente sind mittels zweier flexibler Streifenelemente untereinander verbunden und bilden mit diesen zusammen das Trägerband.

Die bekannte Kugelkette hat den Vorteil, daß die Kugeln in dichter Aufeinanderfolge, d.h. mit geringem Abstand voneinander angeordnet sein können. Dabei beträgt das Verhältnis des Kugeldurchmessers zum Abstand der Mittelpunkte zweier benachbarter Kugeln annähernd 1 : 1. Aufgrund der hieraus resultierenden hohen Kugeldichte weistdie bekannte Kugelkette eine hohe Belastbarkeit bzw. Lasttragefähigkeit auf. Nachteilig ist jedoch die Versteifung des Trägerbands, die mit der Befestigung der beiden Streifenelemente an den Halteelementen im Bereich zwischen zwei aufeinanderfolgenden Kugeln einhergeht. Auf ein Verbiegen des Trägerbands um eine zur Querrichtung des Trägerbands parallel verlaufende Achse, beispielsweise in den Umlenkabschnitten der Laufbahn eines Linearlagers, können die Streifenelemente des Trägerbands lediglich im Bereich ihrer seitlichen Anlage an den Kugeln reagieren, nicht jedoch im Bereich ihrer seitlichen Befestigung an den Halteelementen.

Die hieraus folgende relativ starke Verbiegung des Trägerbands im Bereich seiner seitlichen Anlage an den Kugeln führt zu einer entsprechenden, aus der Elastizität des Trägerbandmaterials resultierenden Rückstellkraft des Trägerbands in seine geradlinige Stellung. Aufgrund des Halteeingriffs des Trägerbands mit den Kugeln beeinflußt diese Rückstellkraft die Bewegung der Kugeln in den Umlenkabschnitten der Laufbahn. Die starke Verbiegung des Trägerbands kann bei einem mit der bekannten Wälzkörperkette bestückten Linearlager zu einer stärkeren Geräuschentwicklung sowie zu einer erhöhten Reibung der Streifenelemente in den Führungsnuten führen.

Weitere Kugelketten mit dicht aufeinanderfolgenden Kugeln sind beispielsweise in der US 2,897,021 und der US 3,292,981 offenbart. Auch bei diesen Kugelketten ist zwischen jeweils zwei aufeinanderfolgenden Kugeln ein Halteelement angeordnet, das sowohl eine Haltefläche zum gleitenden Eingriff mit der vorauslaufenden Kugel als auch eine Haltefläche zum gleitenden Eingriff mit der nachlaufenden Kugel aufweist.

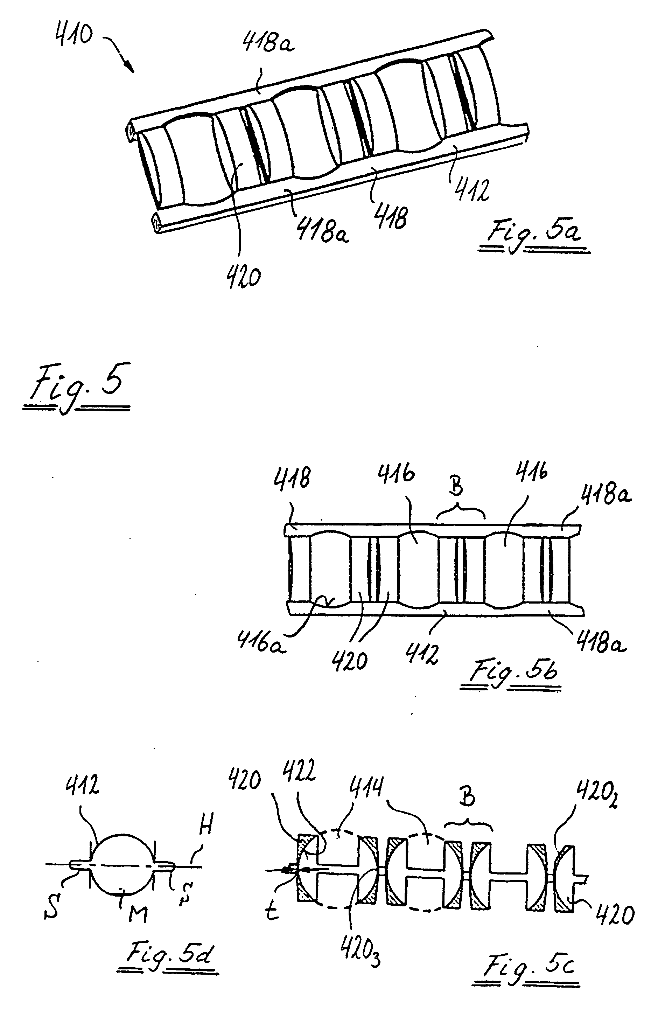

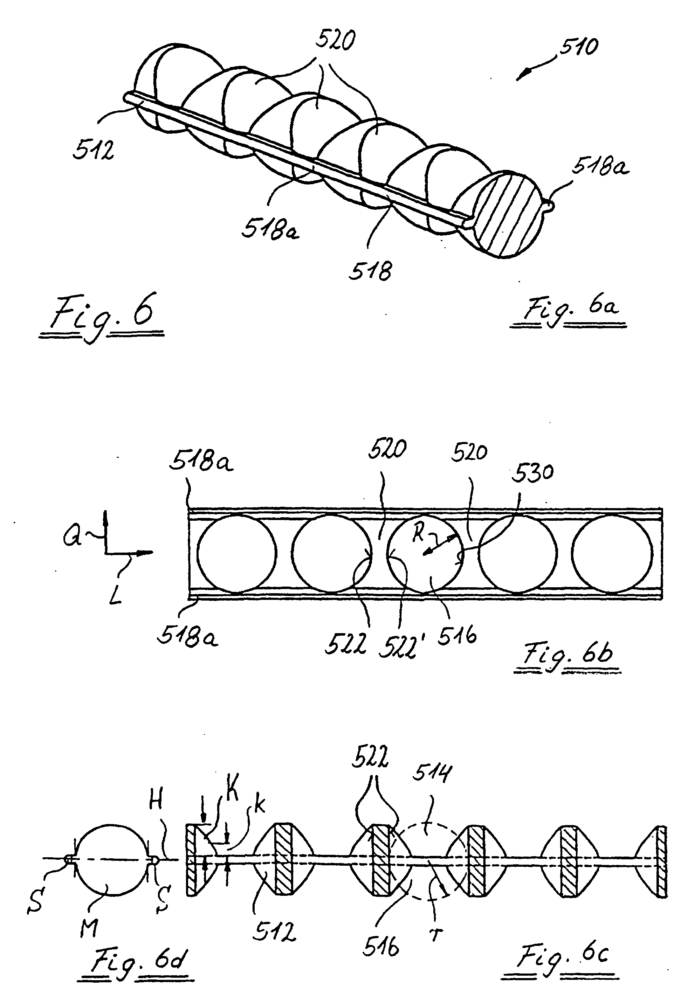

Eine weitere, nicht gattungsgemäße Wälzkörperkette ist aus der japanischen Patent-Offenlegungsschrift 62-242126 (1987) zur japanischen Patentanmeldung 60-253865 (1985) bekannt. Bei den aus den dortigen Figuren 5 und 6 bekannten Wälzkörperketten wird jeder Wälzkörper von zwei ihm und nur ihm zugeordneten Halteelementen gehalten. Somit sind zwischen zwei aufeinanderfolgenden Wälzkörpern zwei körperlich voneinander getrennt ausgebildete Halteelemente vorgesehen, die in einem Mittelabschnitt des Trägerbands in einem vorbestimmten Abstand voneinander angeordnet sind.

Das Trägerband der bekannten Wälzkörperkette hat den Vorteil, daß es nicht nur in den Bereichen seiner seitlichen Anlage an den Wälzkörpern um einer zur Querrichtung parallel verlaufende Achse gebogen werden kann, sondern auch in den Bereichen zwischen zwei aufeinanderfolgenden Wälzkörpern. Durch die verglichen mit der JP-A-5-52217 (1993) doppelte Anzahl von Biegestellen wird bei gleicher Krümmung eines Umlenkabschnitts der Laufbahn das Trägerband an jeder einzelnen Biegestelle weniger verbogen und beeinflußt den Lauf der Wälzkörper in entsprechend geringerem Maße, was eine höhere Laufruhe eines mit der bekannten Wälzkörperkette bestückten Linearlagers zur Folge hat. Die aus der JP-A-62-242126 (1987) bekannte Wälzkörperkette hat jedoch den Nachteil, daß die Wälzkörper in loser Aufeinanderfolge, d.h. mit relativ großem Abstand voneinander angeordnet sind, um den für die gesonderten Halteelemente erforderlichen Raum bereitstellen zu können. Dabei beträgt das Verhältnis des Kugeldurchmessers zum Abstand der Mittelpunkte zweier benachbarter Kugeln etwa 1 : 1,5. Mit der hieraus resultierenden niedrigeren Wälzkörperdichte geht eine entsprechende Minderung der Belastbarkeit der Wälzkörperkette einher.

Aus der DE-PS 835 718 ist eine Wälzkörperkette bekannt, bei welcher der Abstand aufeinanderfolgender Wälzkörper etwa das Doppelte des Wälzkörperdurchmessers beträgt. Gehalten werden die Wälzkörper von zwischen ihnen angeordneten Zungen eines sie tragenden Federstahlbandes. Eine Wälzkörperkette mit ähnlich großem Wälzkörperabstand, d.h. ähnlich loser Aufeinanderfolge der Wälzkörper, ist in der US 2,557,476 offenbart.

Die DE 36 35 261 A1 beschreibt eine Kugelkette mittleren Kugelabstands. D.h. das Verhältnis des Kugeldurchmessers zum Abstand der Mittelpunkte aufeinanderfolgender Kugeln beträgt etwa 1 : 1,25. Jeder der Kugeln sind voneinander gesonderte Halteelemente zugeordnet, die zwischen den Kugeln angeordnet sind. Die Halteelemente sind daher sehr klein und können den Kugeln kaum Halt bieten.

Die aus der DE 29 06 128 A1 bekannte Kugelkette ist aus einer Vielzahl voneinander unabhängig ausgebildeter Ketteneinheiten gebildet, die jeweils der Führung lediglich einer der Kugeln dienen. Diese Anordnung hat daher eine lose Aufeinanderfolge der Kugeln zur Folge. Die die Kugeln aufnehmenden Öffnungen bieten den Kugeln keinen Halt. Daher verfügen die Ketteneinheiten überdies über von den Aufnahmeöffnungen getrennte Führungsblöcke, welche die Ketteneinheiten in dem Kugellaufkanal und insbeodnere dessen Umlenkabschnitten bezüglich des Laufs der Kugeln zentrieren.

Weiterhin sei auf die DE 37 09 039 C2, die DE 89 14 085 U und die US 2,566,421 verwiesen.

Demgegenüber ist es Aufgabe der vorliegenden Erfindung, eine Wälzkörperkette bereitzustellen, welche sich sowohl durch hohe Belastbarkeit bzw. Tragfähigkeit als auch durch hohe Laufruhe auszeichnet.

Die Erfindung wird durch die Merkmale des Anspruchs 1 gelöst. Unter einer dichten Aufeinanderfolge von Wälzkörpern wird dabei gemäß der vorstehenden Diskussion des Standes der Technik eine Aufeinanderfolge verstanden, bei welcher das Verhältnis des Wälzkörperdurchmessers zum Abstand der Mittelpunkte aufeinanderfolgender Wälzkörper weniger als 1 : 1,5, vorzugsweise weniger als 1 : 1,25, am bervorzugtesten annähernd 1 : 1, beträgt.

Dieses Lösungsprinzip beruht auf der kombinierten Wirkung zweier Merkmalsgruppen. Zum einen erreicht man dadurch, daß man jedem Wälzkörper gesonderte Halteelemente zuordnet, eine Flexibilisierung des Trägerbands im Bereich zwischen aufeinanderfolgenden Wälzkörpern, was sich auf die Laufruhe vorteilhaft auswirkt. Indem man darüber hinaus die Halteelemente in den seitlichen Randbereichen des Trägerbands mit dem flexiblen Element verbindet, schafft man gleichzeitig im Bereich des Mittelabschnitts des Trägerbands die erforderliche Freiheit für eine Annäherung der Wälzkörper. Die hieraus resultierende Erhöhung der Anzahl von Wälzkörpern pro Längeneinheit, d.h. die hieraus resultierende Erhöhung der Wälzkörperdichte, wirkt sich auf die Belastbarkeit bzw. Tragfähigkeit der Wälzkörperkette günstig aus.

Festzuhalten ist, daß sich die erfindungsgemäße Wälzkörperkette, insbesondere deren Trägerband, in einfacher Weise herstellen läßt. So kann das Trägerband einstückig, beispielsweise aus einem Kunststoffmaterial aus der Gruppe der Elastomere, wie z.B. Polyurethan, Hytrel oder dergleichen, gefertigt sein, vorzugsweise als Spritzgußteil.

Gemäß einer ersten Ausführungsvariante ist vorgesehen, daß in Längsrichtung des wenigstens einen flexiblen Elements vor und hinter wenigstens einem Wälzkörper jeweils wenigstens zwei diesem Wälzkörper zugeordnete Halteelemente vorgesehen sind. Diese Halteelemente können beidseits des Mittelabschnitts des Trägerbands in dessen Seitenabschnitten angeordnet sein, so daß jeder Wälzkörper, beispielsweise jede Kugel, in einem von wenigstens vier Halteelementen gebildeten Käfig aufgenommen ist.

Wenn zwei Halteelemente, von denen eines oberhalb einer Hauptebene des Trägerbands und eines unterhalb dieser Hauptebene vorgesehen ist, unmittelbar über- bzw. untereinander angeordnet sind, so stellen diese beiden Halteelemente eine gemeinsame sich über einen großen Winkelbereich erstreckende Haltefläche bereit, die einen sicheren Halt des Wälzkörpers gewährleistet.

Ein besonders sicherer Halt des Wälzkörpers kann erzielt werden, wenn dieser zum einen von der Umfangsfläche der diesen Wälzkörper aufnehmenden Ausnehmung und zum anderen von einer Mehrzahl von, vorzugsweise wenigstens vier, Halteelement-Kombinationen gehalten wird, die auf dem Umfang dieser Ausnehmung - vorzugsweise gleichmäßig - verteilt angeordnet sind und deren Halteflächen sich jeweils oberhalb und unterhalb der Hauptebene des Trägerbands, d.h. oberhalb und unterhalb der Umfangsfläche der Ausnehmung, erstrecken.

Gemäß einer zweiten Ausführungsvariante kann wenigstens eines der Halteelemente als Vollring oder Halbring ausgebildet sein, der sich oberhalb oder/und unterhalb einer Hauptebene des Trägerbands von einem Randabschnitt bogenartig zum jeweils anderen Randabschnitt erstreckt. Bei dieser Ausführungsvariante liegen die Halteelemente im Bereich der Längsmitte der Hauptebene des Trägerbands wiederum nicht an den Wälzkörpern an, so daß diese sehr dicht aneinander angenähert werden können. Infolge der bogenförmigen Ausbildung des Halteelements wird überdies eine großflächige Anlage des Halteelements am Wälzkörper und somit ein sicherer Halt des Wälzkörpers erreicht.

Eine bezüglich einer Verbiegung um eine zur Querrichtung des Trägerbands im wesentlichen parallel verlaufende Achse besonders flexible Anordnung kann erhalten werden, wenn ein einem ersten Wälzkörper zugeordneter Halbring und ein diesem ersten Halbring benachbarter, dem nächstfolgenden Wälzkörper zugeordneter zweiter Halbring auf unterschiedlichen Seiten der Hauptebene des Trägerbands angeordnet sind. Bei dieser Ausführung besteht nämlich nicht die Gefahr, daß sich diese beiden Halteelemente bei einer Biegung des Trägerbands berühren und somit den erzielbaren Biegewinkel begrenzen.

Bei der ersten Ausführungsvariante sind es ausschließlich diese Sprossenelemente, die die Verbindung zwischen den beiden Holmenelementen und den an diesen angeordneten Halteelementen herstellen. Bei der zweiten Ausführungsvariante werden die aus der Hauptebene des Führungsbands herausragenden Bögen durch diese Sprossenelemente in Querrichtung des Trägerbands stabilisiert. Beispielsweise wird eine belastungsbedingte Verformung eines kreisring-förmigen Halteelements zu einer Ellipse durch ein derartiges Sprossenelement zumindest erschwert, wenn nicht gar vollständig verhindert. Darüber hinaus können die Sprossenelemente, welche im Mittelabschnitt des Trägerbands in dessen Hauptebene relativ dünn ausgebildet sein können, eine zusätzliche Sicherung darstellen, welche auch unter Belastung der Wälzkörperkette einen direkten Kontakt aufeinanderfolgender Wälzkörper verhindert und somit übermäßigem Verschleiß dieser Wälzkörper vorbeugt.

Gemäß einer weiteren Ausführungsvariante ist vorgesehen, daß wenigstens eines der Halteelemente als Vollscheibe oder Halbscheibe ausgebildet ist, die sich oberhalb oder/und unterhalb einer Hauptebene des Trägerbands zwischen den Randabschnitten erstreckt. Bei dieser Ausführungsvariante ist im Hinblick auf eine möglichst hohe Flexibilität des Trägerbands im Bereich zwischen zwei aufeinanderfolgenden Wälzkörpern bevorzugt, wenn das wenigstens eine flexible Element lediglich zwei flexible Streifenelemente umfaßt, die den beiden Randabschnitten des Trägerbands zugeordnet sind, nicht jedoch diese Streifenelemente in Querrichtung verbindende Stege. Ein Kontakt zweier aufeinanderfolgender Wälzkörper im Bereich des Mittelabschnitts der Hauptebene des Trägerbands wird dabei durch die beiden scheibenförmigen Halteelemente selbst verhindert, welche im Bereich des Mittelabschnitts der Hauptebene des Trägerbands in dessen Längsrichtung eine geringe Wandstärke von höchstens etwa 0,2 x Wälzkörperdurchmesser, vorzugsweise höchstens etwa 0,1 x Wälzkörperdurchmesser, aufweisen, um eine enge Aufeinanderfolge der Wälzkörper zu ermöglichen.

Bei allen vorstehend diskutierten Ausführungsvarianten ist es trotz der engen Aufeinanderfolge der Wälzkörper möglich, daß zwei benachbarte, aufeinanderfolgenden Wälzkörpern zugeordnete Halteelemente in der Hauptebene des Trägerbands einen vorbestimmten Abstand voneinander aufweisen. Hierdurch braucht bei einem Verbiegen des Trägerbands um eine zur Querachse parallel verlaufende Achse im Bereich zwischen zwei aufeinanderfolgenden Wälzkörpern lediglich das Material der Streifen- bzw. Holmenelemente und gegebenenfalls der Sprossenelemente verformt zu werden, während die Halteelemente auch im Bereich ihrer Verbindung mit den Streifen- bzw. Holmen- und Sprossenelementen im wesentlichen keiner Verformung unterliegen.

Auch bei geringem, ja im Extremfall sogar verschwindendem Abstand der Halteelemente in der Hauptebene des Trägerbands kann eine hohe Flexibilitätdes Trägerbands im Bereich zwischen aufeinanderfolgenden Wälzkörpern dadurch gewährleistet werden, daß der Abstand zweier benachbarter, aufeinanderfolgenden Wälzkörpern zugeordneter Halteelemente mit zunehmendem Abstand von der Hauptebene des Trägerbands zunimmt. Dies verhindert, daß die Gefahr eines den Biegewinkel begrenzenden Kontakts benachbarter Halteelemente bereits bei kleinen Biegewinkeln auftritt. Dabei ist es besonders bevorzugt, wenn der Abstand der beiden Halteelemente zumindest in einem der Hauptebene des Trägerbands benachbarten Abschnitt mit zunehmendem Abstand von der Hauptebene des Trägerbands monoton zunimmt.

Gemäß einem weiteren Gesichtspunkt, der nicht unter den Umfang der Ansprüche fällt, wird eine Wälzkörperkette geschaffen, umfassend eine Mehrzahl von in dichter Aufeinanderfolge angeordneten Wälzkörpern und ein längliches Führungsband mit einer Mehrzahl von Ausnehmungen zur Aufnahme der Wälzkörper, einer Mehrzahl von Abstandselementen, und wenigstens einem länglichen flexiblen Elementzum Verbinden der Abstandselemente, wobei das Führungsband in zwei seitliche Randabschnitte und einen diese verbindenden Mittelabschnitt unterteilbar ist, wobei weiter die Abstandselemente an einem vorauslaufenden Ende eine Anlagefläche für einen vorauslaufenden Wälzkörper und an einem nachlaufenden Ende eine Anlagefläche für einen nachlaufenden Wälzkörper aufweisen, und wobei die einem Wälzkörper zugeordneten Anlageflächen Teil einer Zylinderfläche sind, deren Durchmesser größer ist als der Durchmesser der Wälzkörper. Unter einer dichten Aufeinanderfolge von Wälzkörpern wird dabei wiederum eine Aufeinanderfolge verstanden, bei welcher das Verhältnis des Wälzkörperdurchmessers zum Abstand der Mittelpunkte aufeinanderfolgender Wälzkörper weniger als 1 : 1,5, vorzugsweise weniger als 1 : 1,25, am bervorzugtesten annähernd 1 : 1, beträgt.

Bei dieser Wälzkörperkette sind die Wälzkörper in den Ausnehmungen des Führungsbands nicht gehalten, sondern lediglich geführt, so daß das Führungsband insbesondere im Bereich der Umlenkstücke der Laufbahn auf die Wälzkörper keine deren Bewegung beeinflussende, biegebedingte Kraft ausüben kann, was eine entsprechend geringe Geräuschentwicklung nach sich zieht. Die dichte Aufeinanderfolge der Wälzkörper wird wie bei der aus der JP-A-5-52217 bekannten Wälzkörperkette dadurch sichergestellt, daß zwischen zwei aufeinanderfolgenden Wälzkörpern lediglich ein einziges Element angeordnet ist, das im Unterschied zur JP-A-5-52217 jedoch keine Haltefunktion, sondern lediglich Führungs- bzw. Beabstandungsfunktion hat.

Zur Einbringung der vorstehend erläuterten Wälzkörperkette kann das in einem Montageröhrchen aufgenommene, bereits mit Wälzkörpern bestückte Führungsband an den Laufkanal der Linearführungseinheit angenähert und unmittelbar aus dem Montageröhrchen in den Laufkanal übergeführt werden. Somit ist trotz des fehlenden Halts der Wälzkörper in dem Führungsband eine einfache Montage der Wälzkörperkette gemäß dem weiteren Gesichtspunkt sichergestellt.

In Weiterbildung dieser die Wälzkörper lediglich führenden Wälzkörperkette wird vorgeschlagen, daß sich die Zylinderfläche im Mittelabschnitt des Führungsbands über eine größere Höhe erstreckt als in den beiden Seitenabschnitten, wobei zusätzlich oder alternativ vorgesehen sein kann, daß sich die Zylinderfläche im Mittelabschnitt des Führungsbands über eine Höhe erstreckt, die kleiner ist als der Durchmesser des von dieser Zylinderfläche geführten Wälzkörpers, vorzugsweise jedoch größer als dessen Radius.

Nach einer weiteren Ausführungsvariante der in Anspruch 1 definierten Erfindung wird eine Wälzkörperkette geschaffen umfassend eine Mehrzahl von in dichter Aufeinanderfolge angeordneten Wälzkörpern und ein längliches Trägerband mit einer Mehrzahl von Ausnehmungen zur Aufnahme der Wälzkörper, einer Mehrzahl von Halte- bzw. Abstandselementen für die in den Ausnehmungen aufgenommenen Wälzkörper, und wenigstens einem länglichen flexiblen Element zum Verbinden der Halte- bzw. Abstandselemente, wobei die beiden Längsenden des Trägerbands zur Verbindung mit einem weiteren Längsende vorbereitet oder mit einem weiteren Längsende verbunden sind. Durch diese Ausbildung der Wälzkörperkette, für die unabhängiger Schutz angestrebt wird, kann ein Verhaken bzw. Blockieren des jeweils vorauslaufenden Endes des Führungsbandes im Wälzkörperlaufkanal und insbesondere dessen Umlenkabschnitten zumindest erschwert, wenn nicht gar vollständig verhindert werden. Hierdurch kann insgesamt ein ruhigerer Lauf einer mit wenigstens einer derartigen Wälzkörperkette bestückten Führungsvorrichtung, beispielsweise einer Linearführung, erzielt werden.

Das weitere Längsende kann dabei das jeweils andere Längsende des selben Trägerbandes sein. Alternativ ist es jedoch auch möglich, daß das weitere Längsende ein Längsende eines weiteren Trägerbandes ist. Die letztgenannte Alternative eröffnet die Möglichkeit, lange Wälzkörperketten modular aus einer Mehrzahl kürzerer Wälzkörperketten gleicher oder unterschiedlicher Länge oder/und Ausbildung zusammenzusetzen.

Gemäß einer Ausführungsvariante können die Enden der Wälzkörperkette bzw. der Wälzkörperketten formschlüssig miteinander verbunden werden. Hierzu können beispielsweise an den beiden Längsenden miteinander verbindbare Kupplungselemente vorgesehen sein, die vorzugsweise lösbar miteinander verbindbar sind. Die Kupplungselemente können beispielsweise eine Kupplungsausnehmung und einen zum Eingriff in die Kupplungsausnehmung bestimmten Kupplungszapfen umfassen.

Zusätzlich oder alternativ können die beiden Längsenden des Trägerbandes miteinander auch kraftschlüssig verbunden sein, beispielsweise durch Verschweißen, Verkleben oder dergleichen.

Nach einem weiteren Gesichtspunkt, der nicht unter den Umfang der Ansprüche fällt, wird eine Wälzkörperkettenanordnung geschaffen, die eine Mehrzahl von Wälzkörperketten umfaßt. Dabei brauchen die Einzelketten nicht notwendigerweise alle den gleichen Aufbau besitzen. Vielmehr ist es auch möglich, sowohl Wälzkörperketten mit Halteelementen als auch Wälzkörperketten mit Abstandselementen einzusetzen. Darüber hinaus können die Einzelketten in den Wälzkörperumläufen sowohl lose, d.h. nicht zusammenhängend, als auch miteinander verbunden aufeinanderfolgen. Selbstverständlich sind auch Mischformen denkbar, bei welchen einige Einzelketten miteinander verbunden, mit anderen Einzelketten bzw. Einzelkettengruppen jedoch nichtverbunden sind. Eine derartige Wälzkörperkettenanordnung hat den Vorteil vereinfachter Herstellung und Lagerhaltung, da man für jeden Anwendungsfall eine Wälzkörperkettenanordnung geeigneter Länge und Ausbildung modular aus einer Mehrzahl vorgefertigter kürzerer Wälzkörperketten gleicher oder unterschiedlicher Länge oder/und Ausbildung zusammensetzen kann.

Um jeglichem Mißverständnis vorzubeugen, sei an dieser Stelle darauf hingewiesen, daß dann, wenn im Zusammenhang mit der vorliegenden Erfindung von einer "Mehrzahl" von Wälzkörpern bzw. Wälzkörperketten die Rede ist, stets eine Mehrzahl von wenigstens zwei derartigen Wälzkörpern bzw. Wälzkörperketten gemeint ist.

Die Erfindung wird im folgenden anhand der beiliegenden Zeichnung an Ausführungsbeispielen näher erläutert werden. Es stellt dar:
- Fig. 1: eine erste Ausführungsform der erfindungsgemäßen Wälzkörperkette, wobei
Fig. 1a eine Perspektivansicht der Wälzkörperkette zeigt;
Fig. 1b eine Draufsicht der Wälzkörperkette gemäß Fig. 1a zeigt;
Fig. 1c eine Seitenansicht der Wälzkörperkette gemäß Fig. 1 a; und
Fig. 1d eine Stirnansicht der Wälzkörperkette gemäß Fig. 1a zeigt;
- Fig. 2: eine weitere Ausführungsform einer erfindungsgemäßen Wälzkörperkette in Darstellungen analog Fig. 1, wobei jedoch Fig. 2c eine Seitenansicht im Schnitt längs der Linie II-II in Fig. 2b zeigt;
- Fig. 3 und 4: weitere Ausführungsformen erfindungsgemäßer Wälzkörperketten in Ansichten analog Fig. 1;
- Fig. 5: eine weitere Ausführungsform einer erfindungsgemäßen Wälzkörperkette in Ansichten analog Fig. 2;
- Fig. 6: zeigt eine Ausführungsform einer nicht erfindungsgemäßen Wälzkörper kette in Ansichten analog Fig.2;
- Fig. 7: Ansichten ähnlich Fig. 6c (Fig. 7a), Fig. 6b (Fig. 7b) und Fig. 6d (Fig. 7c) einer weiteren nicht erfindungsgemäßen Wälzkörperkette mit verbindbaren Enden; und
- Fig. 8: eine Ansicht ähnlich Fig. 7b einer weiteren Wälzkörperkette mit verbindbaren Enden.

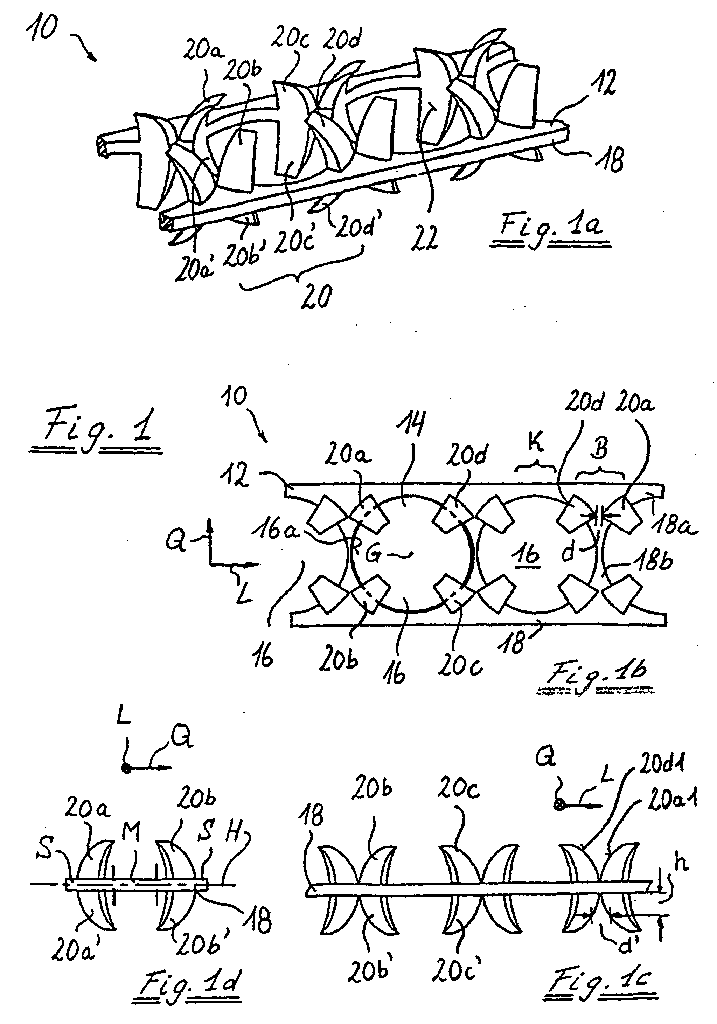

In Fig. 1 ist eine erfindungsgemäße Wälzkörperkette allgemein mit 10 bezeichnet. Sie umfaßt ein Trägerband 12 und eine Mehrzahl von Wälzkörpern, beispielsweise Kugeln 14, welche in Ausnehmungen 16 des Trägerbands 12 aufgenommen sind. Das Trägerband 12 ist von einem flexiblen Verbindungsband 18 sowie an diesem angeordneten Halteelementen 20 gebildet, welche die Kugeln 14 in den Ausnehmungen 16 halten.

In der Ausführungsform gemäß Fig. 1 sind jeder Kugel 14 acht derartige Halteelemente 20 zugeordnet, nämlich vier oberhalb einer Hauptebene H (siehe Fig. 1d) angeordnete Halteelemente 20a, 20b, 20c und 20d, sowie vier unterhalb der Hauptebene angeordnete Halteelemente 20a', 20b', 20c' und 20d'. Jedes der Halteelemente 20 weist eine sphärisch-konkave Haltefläche 22 auf, deren Krümmungsradius auf jenen der zugeordneten Kugel 14 abgestimmt ist.

Darüber hinaus sind bei der Ausführungsform gemäß Fig. 1, wie insbesondere aus Fig. 1a zu ersehen ist, jeweils ein oberhalb der Hauptebene H des Verbindungsbands 18 angeordnetes Halteelement, beispielsweise das Halteelement 20c, und ein unterhalb der Hauptebene H angeordnetes Halteelement, beispielsweise das Halteelement 20c', unmittelbar übereinander angeordnet, so daß ihre beiden Halteflächen eine gemeinsame große Haltefläche bilden, die sich über einen relativ großen Winkelbereich längs der Oberfläche der Kugel 14 erstreckt. Insgesamt ist die Kugel 14 bei der Ausführungsform gemäß Fig. 1 also von vier derartigen Halteelement-Kombinationen 20a/20a', 20b/20b', 20c/20c' und 20d/20d' gehalten, welche gleichmäßig am Umfang der Ausnehmung 16 verteilt angeordnet sind und die Kugel 14 sicher umklammern. Zusätzlich wird die Kugel 14 von der Umfangsfläche der Ausnehmung 16 gehalten.

In einer Variante der in Fig. 1 dargestellten Ausführungsform könnten auch lediglich zwei derartige Halteelement-Kombinationen vorgesehen sein, welche einander bezüglich der Kugel 14 diametral gegenüberliegend angeordnet sind. Die könnten beispielsweise die Halteelement-Kombinationen 20a/20a' und 20c/20c' bzw. die Halteelement-Kombinationen 20b/20b' und 20d/20d' sein.

Wie in Fig. 1d dargestellt ist, kann man das Verbindungsband 18 in einer zur Längsrichtung des Trägerbands 12 orthogonal verlaufenden, in der Hauptebene H liegenden Querrichtung Q grob schematisch in drei Abschnitte unterteilen, nämlich einen Mittelabschnitt M und zwei Seitenabschnitte S.

Bei der Ausführungsform gemäß Fig. 1 sind die Halteelemente 20 ausschließlich in den Seitenabschnitten S des Verbindungsbands 18 angeordnet, geben also den Mittelabschnitt M vollständig frei. Hierdurch können die Ausnehmungen 16 zur Aufnahme der Kugeln 14 dicht aneinander angenähert werden (siehe Fig. 1b). Dies erlaubt es, in einem vorbestimmten Längenabschnitt des Trägerbands 12 eine sehr große Anzahl von Kugeln 14 anzuordnen, d.h. eine hohe Kugeldichte zu erzielen, was sich auf die Belastbarkeit der Kugelkette 10 vorteilhaft auswirkt.

Ferner ist bei der Ausführungsform gemäß Fig. 1 jedes Halteelement 20 einer einzigen Kugel 14 zugeordnet, so daß in einem Längenabschnitt B des Verbindungsbands 18 (siehe Fig. 1 b) jeweils mindestens zwei Halteelemente vorgesehen sind, beispielsweise die Halteelemente 20d und 20a. Dabei weisen die Halteelemente 20d und 20a im Bereich der Hauptebene H des Verbindungsbands 18 einen minimalen Abstand d voneinander auf. Darüber hinaus nimmt der Abstand der beiden Halteelemente mit zunehmender Höhe h über der Hauptebene H des Verbindungsbands 18 zu. In der Ausführungsform gemäß Fig. 1 nimmt dieser Abstand sogar monoton zu, d.h. er steigt von der Hauptebene H ausgehend stets an.

Durch den sich ergebenden konvexen Verlauf der Oberflächen 20d1 und 20a1 der Halteelemente 20d und 20a ist sichergestellt, daß diese Halteelemente bei einem Verbiegen des Trägerbands 12 um eine in Querrichtung Q verlaufende Achse erst bei Erreichen eines vorbestimmten Biegewinkels α miteinander in einer Art und Weise in Wechselwirkung treten, die ein weiteres Verbiegen verhindert. Somit weist das Verbindungsband 18 nicht nur in den Bereichen K seitlicher Anlage an den Kugeln 14, sondern auch in den Bereichen B zwischen jeweils zwei aufeinanderfolgenden Kugeln 14 hohe Flexibilität auf.

Das Verbindungsband 18 hat in der Ausführungsform gemäß Fig. 1 eine im wesentlichen flächige Gestalt. Wie insbesondere Fig. 1d zu entnehmen ist, ist der Querschnitt des Verbindungsbands 18 im wesentlichen rechteckig, wobe die Rechteckform in der Hauptebene H sehr lang gestreckt ist und nur eine geringe Höhe aufweist. Festzuhalten ist, daß dies lediglich eine Ausgestaltungsmöglichkeit für den Querschnitt des Verbindungsbands 18 ist. Grundsätzlich sind auch andere Gestaltungsformen denkbar, beispielsweise Gestaltungsformen mit gekrümmten Oberflächen, an denen die Halteelemente 20 angeordnet sind. So könnte das Verbindungsband 18 anstelle des rechteckförmigen Querschnitts beispielsweise einen lanzettförmigen Querschnitt aufweisen.

Nachzutragen ist noch, daß das Verbindungselement 18 in der Ausführungsform gemäß Fig. 1 leiterartig ausgebildet ist mit zwei sich in Längsrichtung L erstreckenden Holmenelementen 18a und einer Mehrzahl von sich in Querrichtung Q erstreckenden Sprossenstegen 18b, welche die Ausnehmungen 16 voneinander trennen. Die Sprossenstege 18b haben darüber hinaus die Aufgabe, einer direkten Berührung zweier aufeinanderfolgender Kugeln 14 und somit einem übermäßigen Verschleiß dieser Kugeln 14 vorzubeugen.

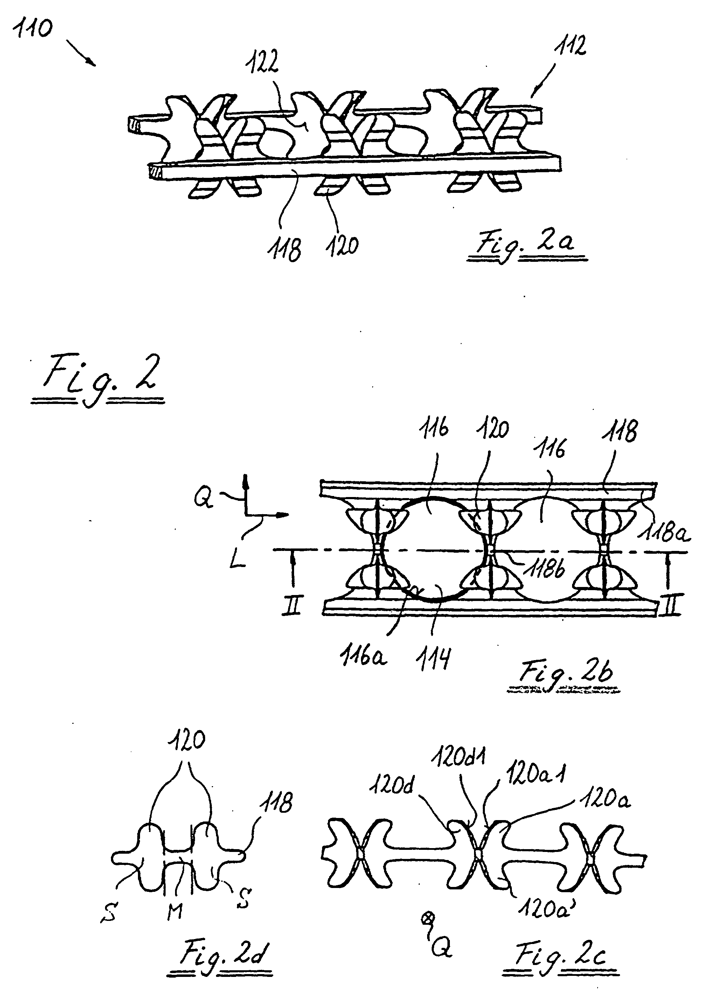

In Fig. 2 ist eine weitere Ausführungsform einer erfindungsgemäßen Wälzkörperkette dargestellt, die im wesentlichen der Ausführungsform gemäß Fig. 1 entspricht. Daher sind in Fig. 2 analoge Teile mit gleichen Bezugszeichen versehen wie in Fig. 1, jedoch vermehrt um die Zahl 100. Darüber hinaus wird die Ausführungsform gemäß Fig. 2 im folgenden nur insoweit beschrieben werden, als sie sich von der Ausführungsform gemäß Fig. 1 unterscheidet, auf deren Beschreibung ansonsten hiermit ausdrücklich verwiesen sei.

Wie bei der Ausführungsform gemäß Fig. 1, weist bei der Wälzkörperkette 110 gemäß Fig. 2 das Trägerband 112 jeweils acht Halteelemente 120 auf, die einer Ausnehmung 116 zur Aufnahme einer Kugel 114 zugeordnet sind. Die Halteelemente 120 sind wiederum paarweise übereinander angeordnet (siehe beispielsweise in Fig. 2c die Halteelemente 120a und 120a') und bilden so vier Klammern mit Halteflächen 122. Entsprechend der Ausführungsform gemäß Fig. 1 sind auch die Halteelemente 120 in Seitenabschnitten S des Verbindungsbands 118 angeordnet, während das Verbindungsband 118 im Mittelabschnitt M frei von Ansätzen ist, was eine dichte Annäherung der Ausnehmungen 116 aneinander ermöglicht (siehe Fig. 2b). Wie in Fig. 2c dargestellt, sind darüber hinaus die Begrenzungsflächen 120d1 und 120a1 einander benachbart angeordneter Halteelemente 120d und 120a konvex ausgebildet, um bei einer Verbiegung um die Querachse Q eine frühzeitige biegewinkel-begrenzende Wechselwirkung der Halteelemente 120d und 120a zu verhindern.

Der Hauptunterschied zwischen den Ausführungsformen gemäß Fig. 1 und Fig. 2 besteht darin, daß bei der Wälzkörperkette 110 gemäß Fig. 2 die Halteelemente 120 im wesentlichen in Längsrichtung L des Trägerbands 112 ausgerichtet sind, während die Halteelemente 20 gemäß Fig. 1 auf eine durch den Mittelpunkt der Kugel 14 und orthogonal zur Hauptebene 18 verlaufende Gerade G hin ausgerichtet sind (siehe Fig. 1b). Als Hauptfolge dieser Ausrichtung berühren sich zwei benachbarte Halteelement 120d und 120a längs einer Kontaktlinie, während die Halteelemente 20d und 20a gemäß Fig. 1 allenfalls Punktkontakt haben. Aufgrund der vorstehend mit Bezug auf Fig. 2c geschilderten konvexen Ausbildung der Begrenzungsflächen 120d1 und 120a1 stellt dieser Linienkontakt in der Hauptebene H jedoch kein biegewinkel-begrenzendes Problem dar.

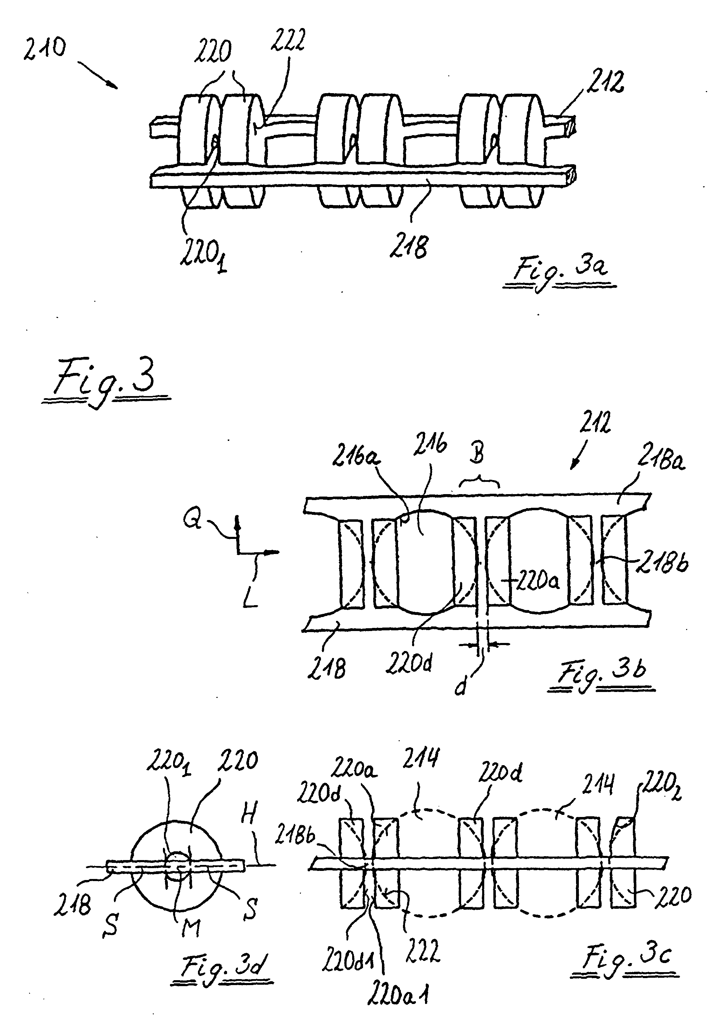

Eine weitere Ausführungsform einer erfindungsgemäßen Wälzkörperkette ist in Fig. 3 dargestellt. Diese entspricht im wesentlichen der Ausführungsform gemäß Fig. 1 und 2. Daher sind in Fig. 3 analoge Teile mit gleichen Bezugszeichen versehen wie in Fig. 1, jedoch vermehrt um die Zahl 200. Ferner wird die Ausführungsform gemäß Fig. 3 im folgenden nur insoweit beschrieben, als sie sich von den vorstehenden Ausführungsformen unterscheidet, auf deren Beschreibung hiermit ausdrücklich verwiesen sei.

Bei der Wälzkörperkette 210 sind die zum Halten der Kugeln 214 vorgesehenen Halteelemente 220 jeweils als ringförmiges Element ausgebildet, welches an seiner der Kugel 214 zugewandten Seite eine sphärisch-konkave Haltefläche 222 aufweist. Das Ringelement 220 verläuft orthogonal zur Längsrichtung L sowie orthogonal zur Hauptebene H oberhalb und unterhalb der Hauptebene H des Verbindungsbands 218 bogenartig von einem Seitenabschnitt S des Verbindungsbands 218 zum anderen unter Überbrückung des dem Lumen 220₁ des jeweiligen Halteelements 220 zugeordneten Mittelabschnitts M des Verbindungsbands 218. Hierdurch können die in den Ausnehmungen 216 des Trägerbands 212 angeordneten Kugeln 214 dicht aneinander angenähert werden, wobei sie an den den Halteflächen 222 abgewandten Begrenzungsflächen 222d1 bzw. 222a1 durch die Lumen 220₁ hindurchragen und lediglich durch die Sprossen 218b des Verbindungsbands 218 auf Sicherheitsabstand gehalten werden.

Jeder Kugel 214 sind zwei Halteelemente 220a und 220d zugeordnet, wobei in einem Bereich B zwischen zwei Kugeln 214 einander benachbarte Halteelemente einen vorbestimmten nicht verschwindenden Abstand d voneinander aufweisen, was die gewünschte Flexibiisierung des Trägerbands 212 sicherstellt. Durch eine Abschrägung 220₂, wie sie in Fig. 3c am oberen Ende des rechtesten Halteelements dargestellt ist, können für den praktischen Gebrauch ausreichend große Biegewinkel erzielt werden.

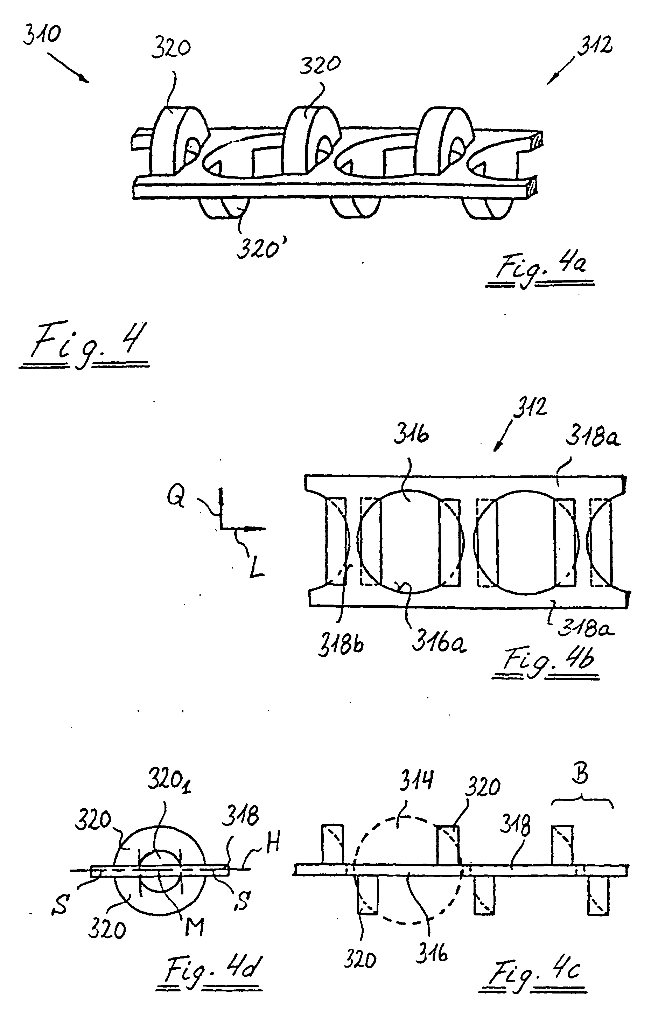

Die Ausführungsform der Wälzkörperkette gemäß Fig. 4 entspricht im wesentlichen jener gemäß Fig. 3. Daher sind in Fig. 4 analoge Teile mit gleichen Bezugszeichen versehen wie in Fig. 3, jedoch vermehrt um die Zahl 100, d.h. im Vergleich mit Fig. 1 vermehrt um die Zahl 300. Darüber hinaus wird die Ausführungsform gemäß Fig. 4 im folgenden nur insoweit beschrieben werden, als sie sich von der Ausführungsform gemäß Fig. 3 unterscheidet, auf deren Beschreibung hiermit ansonsten ausdrücklich verwiesen sei.

Die Wälzkörperkette 310 gemäß Fig. 4 unterscheidet sich von der Wälzkörperkette 210 gemäß Fig. 3 dadurch, daß anstelle der Vollring-Halteelemente 220 Halbring-Halteelemente 320 vorgesehen sind, die sich entweder vollständig oberhalb oder vollständig unterhalb der Hauptebene H des Verbindungsbands 318 orthogonal zur Längsrichtung L und orthogonal zur Hauptebene H erstrecken.

Jeder Ausnehmung 316 zur Aufnahme einer Kugel 314 sind zwei derartige Halbring-Halteelemente 320 und 320' zugeordnet, von denen eines 320 oberhalb der Hauptebene H und eines 320' unterhalb der Hauptebene H angeordnet ist, so daß die Kugel 314 sicher in der Ausnehmung 316 des Trägerbands 312 gehalten ist. Wiederum ermöglicht das Lumen 320₁ der Halbring-Halteelemente 320 eine dichte Annäherung aufeinanderfolgender Kugeln 314. Zudem sorgt das Sprossenelement 318b für den zur Sicherstellung geringen Verschleißes erforderlichen Mindestabstand der Kugeln 314.

Die im Bereich B einander benachbarten Halteelemente 320 sind auf verschiedenen Seiten der Hauptebene H des Verbindungsbands 318 angeordnet. Somit besteht bei einem Verbiegen des Trägerbands 312 um eine zur Querrichtung Q parallel verlaufende Achse nicht die Gefahr eines biegewinkel-begrenzenden Kontakts der beiden Halteelemente 320.

Zu den Ausführungsformen gemäß Fig. 1 bis 4 ist noch nachzutragen, daß die Wälzkörper 14 bzw. 114 bzw. 214 bzw. 314 zusätzlich zu den von den Halteelementen 20 bzw. 120 bzw. 220 bzw. 320 bereitgestellten, aus der Hauptebene H des Verbindungsbands 18 bzw. 118 bzw. 218 bzw. 318 herausragenden Halteflächen 22 bzw. 122 bzw. 222 bzw. 322 auch von der jeweiligen in der Hauptebene H verlaufenden Umfangsfläche 16a bzw. 116a bzw. 216a bzw. 316a der Ausnehmungen 16 bzw. 116 bzw. 216 bzw. 316 gehalten sind, was einen sicheren Halt der Wälzkörper in den Ausnehmungen gewährleistet.

Die Ausführungsform gemäß Fig. 5 hat große Ähnlichkeit mit der Ausführungsform gemäß Fig. 3. Daher sind in Fig. 5 analoge Teile mit gleichen Bezugszeichen versehen wie in Fig. 3, jedoch vermehrt um die Zahl 200, d.h. verglichen mit Fig. 1 vermehrt um die Zahl 400. Darüber hinaus wird die Ausführungsform gemäß Fig. 5 im folgenden nur insoweit beschrieben, als sie sich von der Ausführungsform gemäß Fig. 3 unterscheidet, auf deren Beschreibung hiermit ansonsten ausdrücklich verwiesen sei.

Im Unterschied zur Wälzkörperkette 210 gemäß Fig. 3 sind die Halteelemente 420 des Trägerbands 412 der Wälzkörperkette 410 gemäß Fig. 5 als durchbrechungsfreie Vollscheibenelemente ausgebildet, die an ihrer der jeweiligen Kugel 414 zugewandten Seite eine sphärisch-konkave Ausnehmung 422 aufweisen. Im Bereich der Hauptebene H des Trägerbands 412 weisen die Halteelemente 420 eine sehr dünne, vorzugsweise nicht verschwindende Wandstärke 420₃ auf (siehe Fig. 5c), deren Wert t höchstens etwa 0,2 x Wälzkörperdurchmesser, vorzugsweise höchstens etwa 0,1 x Wälzkörperdurchmesser, beträgt.

Ein weiterer Unterschied zwischen den Ausführungsformen gemäß Fig. 3 und Fig. 5 besteht darin, daß das Verbindungsband 418 der Wälzkörperkette 410 gemäß Fig. 5 lediglich zwei Streifenelemente 418a aufweist, welche ausschließlich über die Halteelemente 420 miteinander verbunden sind. Es sind also keine Sprossenstege entsprechend den Sprossenstegen 218b vorhanden. Die dichte Annäherung aufeinanderfolgender Kugeln 414 wird durch das Fehlen dieser Stegabschnitte erleichtert, wobei die Sicherheitsfunktion des Stegs bei der Ausführungsform gemäß Fig. 5 von der dünnen Materialhaut 420₃ der Halteelemente 420 übernommen werden kann.

Auch hinsichtlich der Flexibilisierung des Trägerbands 412 im Bereich B zwischen zwei aufeinanderfolgenden Kugeln 414 bzw. Ausnehmungen 416 erweist sich das Fehlen des jeweiligen Sprossenstegs als vorteilhaft, da lediglich das Material der Seitenstreifen 418a verbogen werden muß. Hinsichtlich der Begrenzung des Biegewinkeis gilt das zur Ausführungsform gemäß Fig. 3 Gesagte, wobei wiederum auf die Möglichkeit einer Abschrägung 420₂ hingewiesen sei, die in Fig. 5c beim rechtesten Halteelement 420 grobschematisch dargestellt ist.

Eine weitere Ausführungsform einer nicht erfindungsgemäßen Wälzkörperkette 510 ist in Fig. 6 dargestellt. Die Wälzkörperkette 510 umfaßt ein Führungsband 512 und eine Mehrzahl von Wälzkörpern, beispielsweise Kugeln 514. Das Führungsband 512 setzt sich aus einer Mehrzahl von Abstandselementen 520 und zwei diese Abstandselemente 520 miteinander verbindenden Streifenelementen 518a zusammen. Die Abstandselemente 520 weisen sowohl auf ihrer in Längsrichtung L vorauslaufenden Seite als auch auf ihrer in Längsrichtung L nachlaufenden Seite jeweils eine Führungsfläche 522 bzw. 522' für einen vorauslaufenden bzw. einen nachlaufenden Wälzkörper 514 auf. Zwei benachbarte Abstandselemente 520 sowie die beiden Streifenelemente 518a begrenzen Ausnehmungen 516 zur Aufnahme jeweils einer Kugel 514. Dabei sind die die Ausnehmung 516 umgrenzenden Flächen, insbesondere die Anlageflächen 522, 522' als Teil einer Zylinderfläche 530 ausgebildet, deren Radius R größer ist als der Radius r der Kugel 514.

Somit kann das Führungsband 512 bzw. können die Abstandselemente 520 auf die Wälzkörper 514 keinerlei Haltefunktion ausüben, sondern dienen lediglich dazu, einen Sicherheitsabstand zwischen zwei aufeinanderfolgenden Wälzkörpern 514 zu gewährleisten, so daß diese nicht aufgrund gegenseitiger Reibung übermäßig verschleißen. Darüber hinaus kann das Führungsband 512 auch keine Kraft in einer orthogonal zur Hauptebene H weisenden Richtung auf die Wälzkörper 514 ausüben, so daß sich die Wälzkörper insbesondere in den Umlenkstücken der Umlaufbahn ungehindert bewegen können, was sich auf die Geräuschentwicklung günstig auswirkt.

Die Zylinderfläche 530 weist im Mittelabschnitt M des Führungsbands 512 eine größere Höhe K auf als in den beiden Seitenabschnitten S. Genauer gesagt nimmt die Höhe k der Zylinderfläche 530 vom Mittelabschnitt M zu den Seitenabschnitten hin ab. Der Maximalwert K der Zylinderflächenhöhe ist dabei kleiner als der Durchmesser 2r des von dieser Zylinderfläche 530 geführten Wälzkörpers 514, damit sich das Führungsband 512 in der Laufbahn einer Linearführungseinheit möglichst reibungsfrei bewegen kann und somit den Lauf der Wälzkörper möglichst wenig behindert. Darüber hinaus sollte dieser Maximalwert K jedoch größer sein als der Radius r der Wälzkörper 514, um stets einen sicheren Mitnahmeeingriff zwischen Führungsband 512 und Wälzkörpern gewährleisten zu können.

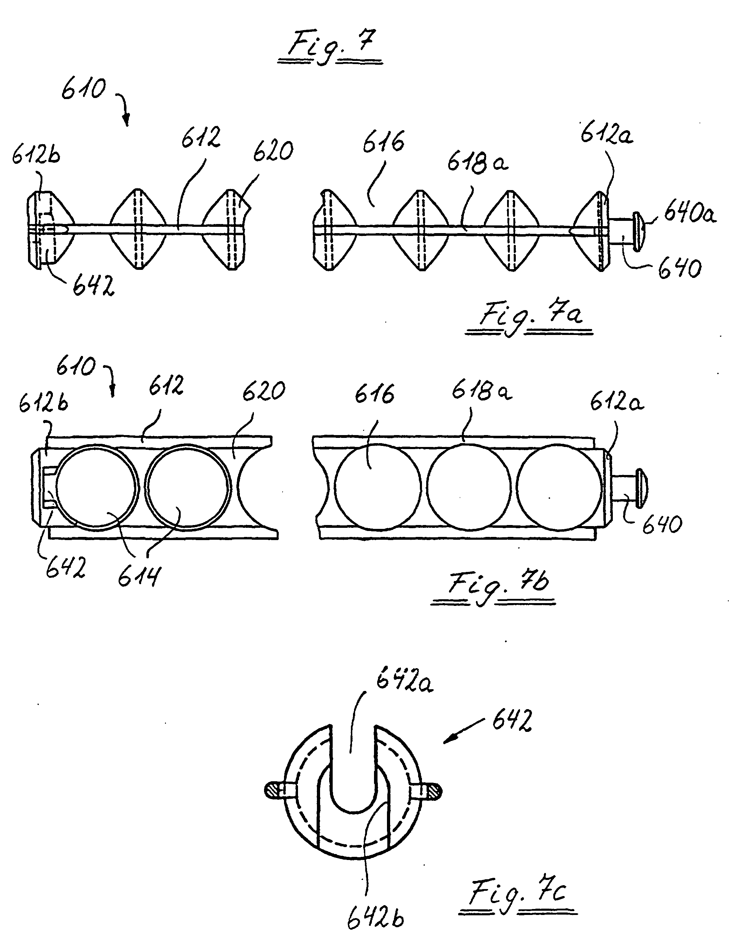

In Fig. 7 ist am Beispiel einer Wälzkörperkette, die im wesentlichen ähnlich ausgebildet ist wie die Wälzkörperkette 510 gemäß Fig. 6, eine weitere Konstruktionsvariante von, Wälzkörperketten dargestellt. Dabei sei bereits an dieser Stelle darauf hingewiesen, daß die Anwendung dieser Konstruktionsvariante nicht nur auf die Wälzkörperkette 510 gemäß Fig. 6 beschränkt ist, sondern ebenso auch bei den Wälzkörperketten 10, 110, 210, 310, 410 gemäß Fig. 1 - 5 zum Einsatz kommen kann.

Die Wälzkörperkette 610 gemäß Fig. 7 entspricht in ihrem Aufbau, wie bereits erwähnt, im wesentlichen der Wälzkörperkette 510 gemäß Fig. 6. D.h. sie verfügt über eine Mehrzahl von Abstandselementen 620, die durch zwei flexible Streifenelemente 618a miteinander verbunden sind und mit diesen ein Führungsband 612 bilden, das eine Mehrzahl von Ausnehmungen 616 zur Aufnahme von Kugeln 614 aufweist. Im Unterschied zum Führungsband 512 gemäß Fig. 6 ist das Führungsband 612 gemäß Fig. 7 an seinen beiden Längsenden 612a und 612b derart ausgebildet, daß diese beiden Längsenden 612a und 612b bzw. die entsprechenden Längsenden zweier aufeinanderfolgender Führungsbänder 612 miteinander lösbar verbunden werden können. Hierzu ist an dem in Fig. 7 rechten Längsende 612a ein Kupplungszapfen 640 angeordnet und ist in dem anderen Längsende 612b eine Kupplungsausnehmung 642 vorgesehen, in welche der Kupplungszapfen 640 zur Verbindung der beiden Längsenden 612a und 612b eingeführt, insbesondere eingehakt, werden kann.

Die Kupplungsausnehmung 642 kann dabei derart ausgebildet sein, daß der Kupplungszapfen 640 lediglich aufgrund der in Längsrichtung der Wälzkörperkette 610 wirkenden Zugkraft reibschlüssig in ihr gehalten wird. Bevorzugt ist jedoch die Einführöffnung 642a (s. Fig. 7c) von einer Aufnahme 642b umgeben, in welche der Kopf 640a des Kupplungsstutzens 640 formschlüssig eingelegt werden kann. Die Tiefe der Ausnehmung 642b kann dabei derart bemessen sein, daß ein Außer-Eingriff-Geraten von Kupplungsstutzen 640 und Kupplungsausnehmun 642 in dem in einer Führungseinrichtung, beispielsweise einem Linearlager, montierten Zustand der Wälzkörperkette 610 zuverlässig verhindert wird.

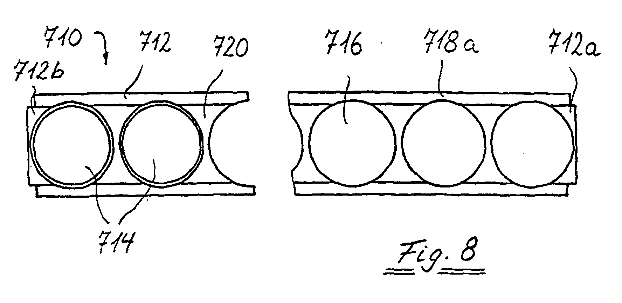

Bei der in Fig. 8 dargestellten Ausführungsvariante, bei der das Führungsband 712 wiederum eine Mehrzahl von Abstandselementen 720 umfaßt, welche mittels zweier flexibler Streifenelemente 718 miteinander verbunden sind unter Bildung einer Mehrzahl von Ausnehmungen 716 zur Aufnahme von Kugeln 714, sind die beiden Längsenden 712a und 712b des Führungsbands 712 dazu vorbereitet, verklebt, verschweißt oder auf andere Weise miteinander oder mit einem entsprechenden Längsende eines weiteren Führungsbands kraftschlüssig verbunden zu werden. Ansonsten sei hiermit ausdrücklich auf die Beschreibung der vorstehenden Ausführungsformen verwiesen.

Festzuhalten ist noch, daß auch eine sowohl formschlüssige als auch zur Sicherung des Formschluß zusätzlich kraftschlüssige Verbindung der beiden Längsenden des Führungsbands denkbar ist.

In allen vorstehend erläuterten Ausführungsformen ist das Träger- bzw. Führungsband bevorzugt einstückig und aus Kunststoff gefertigt, beispielsweise als Spritzgußteil. Als Kunststoffe kommen dabei beispielsweise Elastomere, wie z.B. Polyurethan, Hytrel oder dergleichen in Betracht.

Obgleich in allen vorstehend erläuterten Fig. 1 bis 6 Kugelketten dargestellt sind, sei betont, daß die vorliegende Erfindung auch bei mit anderen Arten von Wälzkörpern, beispielsweise Rollen oder dergleichen, bestückten Wälzkörperketten verwirklicht werden kann.

## Patentansprüche

1. Wälzkörperkette (10; 110; 210; 310; 410) umfassend
- eine Mehrzahl von in dichter Aufeinanderfolge angeordneten Wälzkörpern (14; 114; 214; 314; 414) und
- ein längliches Trägerband (12; 112; 212; 312; 412) mit
-- einer Mehrzahl von Ausnehmungen (16; 116; 216; 316; 416) zur Aufnahme der Wälzkörper,
-- einer Mehrzahl von Halteelementen (20; 120; 220; 320; 420) zum Halten der in den Ausnehmungen aufgenommenen Wälzkörper, und
-- wenigstens einem länglichen flexiblen Element (18; 118; 218; 318; 418) zum Verbinden der Halteelemente,
- wobei das Trägerband zwei seitliche Randabschnitte (S) und einen diese verbindenden Mittelabschnitt (M) aufweist,
- wobei das wenigstens eine flexible Element leiterartig ausgebildet ist mit
-- zwei in Längsrichtung (L) verlaufenden Holmenelementen (18a; 118a; 218a; 318a) in den beiden Randabschnitten des Trägerbandes und
-- einer Mehrzahl diese Holmenelemente verbindenden Sprossenelementen (18b; 118b; 218b; 318b) im Mittelabschnitt des Trägerbandes, und
- wobei die Halteelemente mit dem wenigstens einen flexiblen Element in den seitlichen Randbereichen (S) des Trägerbands verbunden sind,
**dadurch gekennzeichnet, daß**
- aufeinanderfolgenden Wälzkörpern (14; 114; 214; 314; 414) gesonderte Halteelemente (20; 120; 220; 320; 420) zugeordnet sind,
- wobei an dem wenigstens einen flexiblen Element (18; 118; 218; 318; 418) in dessen Längsrichtung (L) vor und hinter jedem Wälzkörper wenigstens ein diesem Wälzkörper zugeordnetes Halteelement (20; 120; 220; 320; 420) vorgesehen ist.

2. Wälzkörperkette nach Anspruch 1,
**dadurch gekennzeichnet, dass** in Längsrichtung (L) des wenigstens einen flexiblen Elements (18; 118) vor und hinter wenigstens einem Wälzkörper (14; 114) jeweils wenigstens zwei diesem Wälzkörper (14; 114) zugeordnete Halteelemente (20; 120) vorgesehen sind.

3. Wälzkörperkette nach Anspruch 2,
**dadurch gekennzeichnet, dass** wenigstens zwei Halteelemente (20c, 20c'; 120a, 120a'), von denen eines (20c; 120a) oberhalb einer Hauptebene (H) des Trägerbands (12; 112) und eines (20c'; 120a') unterhalb dieser Hauptebene (H) vorgesehen ist, unmittelbar über- bzw. untereinander angeordnet sind.

4. Wälzkörperkette nach Anspruch 3,
**dadurch gekennzeichnet, dass** die Wälzkörper (14; 114) zum einen von der Umfangsfläche (16a; 116a) der diese aufnehmenden Ausnehmung (16; 116) und zum anderen von einer Mehrzahl von, vorzugsweise wenigstens vier, Halteelement-Kombinationen (20a/20a', 20b/20b', 20c/20c', 20d/20d'; 120a/120a') gehalten werden, die auf dem Umfang dieser Ausnehmung (16; 116), vorzugsweise gleichmäßig, verteilt angeordnet sind und deren Halteflächen (22; 122) sich jeweils oberhalb und unterhalb der Hauptebene (H) des Trägerbands (12; 112) erstrecken.

5. Wälzkörperkette nach Anspruch 1,
**dadurch gekennzeichnet, dass** wenigstens eines der Halteelemente (220; 320) als Vollring oder Halbring ausgebildet ist, der sich oberhalb oder/und unterhalb einer Hauptebene (H) des Trägerbands (212; 312) von einem Randabschnitt (S) bogenartig zum jeweils anderen Randabschnitt (S) erstreckt.

6. Wälzkörperkette nach Anspruch 5,
**dadurch gekennzeichnet, dass** die Wälzkörper (214; 314) durch ein Lumen (220₁; 320₁) des Halteelements (220; 320) auf dessen von seiner Haltefläche (222; 322) abgewandten Seite hervorstehen.

7. Wälzkörperkette nach Anspruch 5 oder 6,
**dadurch gekennzeichnet, dass** ein einem ersten Wälzkörper (314) zugeordneter Halbring (320) und der diesem Halbring (320) benachbarte, dem nächstfolgenden Wälzkörper (314) zugeordnete Halbring (320') auf verschiedenen Seiten der Hauptebene (H) des Trägerbands (312) angeordnet sind.

8. Wälzkörperkette nach Anspruch 1,
**dadurch gekennzeichnet, dass** wenigstens eines der Halteelemente (420) als Vollscheibe oder Halbscheibe ausgebildet ist, die sich oberhalb oder/und unterhalb einer Hauptebene (H) des Trägerbands (412) zwischen den Randabschnitten (S) erstreckt.

9. Wälzkörperkette nach einem der Ansprüche 1 bis 8,
**dadurch gekennzeichnet, dass** zwei benachbarte, aufeinanderfolgenden Wälzkörpern (14; 114; 214; 314; 414) zugeordnete Halteelemente (20; 120; 220; 320; 420) in der Hauptebene (H) des Trägerbands (12; 112; 212; 312; 412) einen vorbestimmten Abstand (d) voneinander aufweisen.

10. Wälzkörperkette nach Anspruch 9,
**dadurch gekennzeichnet, dass** der Abstand zweier benachbarter, aufeinanderfolgenden Wälzkörpern (14; 114; 214; 414) zugeordneter Halteelemente (20; 120; 220; 420) mit zunehmendem Abstand von der Hauptebene (H) des Trägerbands (12; 112; 212; 412) zunimmt (20a1, 20d1; 120a1, 120d1; 220₂; 420₂).

11. Wälzkörperkette nach Anspruch 10,
**dadurch gekennzeichnet, dass** der Abstand der beiden Halteelemente (20; 120) zumindest in einem der Hauptebene (H) des Trägerbands (12; 112) benachbarten Abschnitt mit zunehmendem Abstand von der Hauptebene (H) des Trägerbands (12; 112) monoton zunimmt (20a1, 20d1; 120a1, 120d1).

12. Wälzkörperkette nach einem der Ansprüche 1 bis 11,
**dadurch gekennzeichnet, dass** das Trägerband (12; 112; 212; 312; 412) einstückig ausgebildet ist.

13. Wälzkörperkette nach einem der Ansprüche 1 bis 12,
**dadurch gekennzeichnet, dass** das Trägerband (12; 112; 212; 312; 412) aus Kunststoff gefertigt ist.

14. Wälzkörperkette nach einem der Ansprüche 1 bis 13,
**dadurch gekennzeichnet, dass** das Trägerband (12; 112; 212; 312; 412) spritzgegossen ist.

15. Wälzkörperkette nach einem der Ansprüche 1 bis 14,
**dadurch gekennzeichnet, dass** die Wälzkörper (14) Kugeln sind.

## Claims

1. Chain of rolling members (10; 110; 210; 310; 410) comprising
- a plurality of rolling members (1.4; 114, 214, 314, 414) arranged in close succession and
- an elongate carrier strip (12; 112; 12; 12; 412) comprising
- a plurality of recesses (16; 116; 216; 316; 416) for receiving the rolling members,
- a plurality of holding elements (20; 120; 220; 320; 420) for holding the rolling members received in the recesses, and
- at least one elongate flexible element (18; 118; 218; 318; 418) for connecting the holding elements,
- the carrier strip comprising two lateral edge portions (S) and a centre portion (M) connecting these,
- the at least one flexible element being constructed in the manner of a ladder comprising
- two rail elements (18a; 118a; 218a; 318a) extending in the longitudinal direction (L) in the two edge portions of the carrier strip and
- a plurality of rung elements (18b; 118b; 218b; 318b) connecting these beam elements in the centre portion of the carrier strip, and
- the holding elements being connected to the at least one flexible element in the lateral edge regions (S) of the carrier strip,
**characterised in that**
- separate holding elements (20; 120; 220; 320; 420) are associated with successive rolling members (14; 114; 214; 314; 414),
- at least one holding element (20; 120; 220; 320; 420) associated with each rolling member being provided on the at least one flexible element (18; 118; 218; 318; 418), in the longitudinal direction (L) thereof, in front of and behind each rolling member.

2. Chain of rolling members according to claim 1, **characterised in that**, in the longitudinal direction (L) of the at least one flexible element (18; 118), before and after at least one rolling member (14; 114), at least two holding elements (20; 120) associated with this rolling member (14; 114) are provided in each case.

3. Chain of rolling members according to claim 2, **characterised in that** at least two holding elements (20c, 20c'; 120a, 120a'), one (20c; 120a) of each is provided above a main plane (H) of the carrier strip (12' 112) and one (20c'; 120a') below this main plane (H), are arranged immediately above or below one another.

4. Chain of rolling members according to claim 3, **characterised in that** the rolling members (14; 114) are held, on the one hand, by the peripheral surface (16a; 116a) of the recess (16; 116) receiving these rolling members and, on the other hand, by a plurality of, preferably at least four, holding element combinations (20a/20a', 20b/20b', 20c/20c', 20d/20d'; 120a/120a'), which are distributed, preferably uniformly, on the periphery of this recess (16; 116), and the holding surfaces (22; 122) of which extend respectively above and below the main plane (H) of the carrier strip (12; 112).

5. Chain of rolling members according to claim 1, **characterised in that** at least one of the holding elements (220; 320) is constructed as a full ring or half ring, which extends in an arcuate manner, above and/or below a main plane (H) of the carrier strip (212; 312), from one edge portion (S) to the respective other edge portion (S).

6. Chain of rolling members according to claim 5, **characterised in that** the rolling members (214; 314) protrude through a lumen (220₁; 320₁) of the holding element (220; 320), on its side remote from the holding surface (222; 322).

7. Chain of rolling members according to either claim 5 or claim 6, **characterised in that** a half ring (320) that is associated with a first rolling member (314) and the half ring (320') that is adjacent to this half ring (320) and is associated with the following rolling member (314) are arranged on different sides of the main plane (H) of the carrier strip (312).

8. Chain of rolling members according to claim 1, **characterised in that** at least one of the holding elements (420) is constructed as a full disc or half disc, which extends above and/or below a main plane (H) of the carrier strip (412) between the edge portions (S).

9. Chain of rolling members according to any one of claims 1 to 8, **characterised in that** two adjacent holding elements (20; 120; 220; 320; 420) associated with successive rolling members (14; 114; 214; 314; 414) are at a predetermined distance (d) from each other in the main plane (H) of the carrier strip (12; 112; 212; 312; 412).

10. Chain of rolling members according to claim 9, **characterised in that** the distance between two adjacent successive rolling members (14; 114; 214; 414) of associated holding elements (20; 120; 220; 420) increases (20a1, 20d1; 120a1, 120d1; 220₂; 420₂) as the distance from the main plane (H) of the carrier strip (12; 112; 212; 412) increases.

11. Chain of rolling members according to claim 10, **characterised in that** the distance between the two holding elements (20; 120), at least in a portion adjacent to the main plane (H) of the carrier strip (12; 112), increases monotonically (20a1, 20d1; 120a1, 120d1) as the distance from the main plane (H) of the carrier strip (12; 112) increases.

12. Chain of rolling members according to any one of claims 1 to 11, **characterised in that** the carrier strip (12; 112; 212; 312; 412) is constructed in one piece.

13. Chain of rolling members according to any one of claims 1 to 12, **characterised in that** the carrier strip (12; 112; 212; 312; 412) is made of plastics material.

14. Chain of rolling members according to any one of claims 1 to 13, **characterised in that** the carrier strip (12; 112; 212; 312; 412) is injection-moulded.

15. Chain of rolling members according to any one of claims 1 to 14, **characterised in that** the rolling members (14) are balls.

## Revendications

1. Chaîne de corps de roulement (10; 110; 210 ; 310; 410) comprenant
- une pluralité de corps de roulement (14 ; 114; 214 ; 314 ; 414) disposés dans une succession serrée et
- une bande de support (12 ; 112 ; 212 ; 312 ; 412) allongée avec
- une pluralité d'évidements (16 ; 116; 216; 316; 416) pour recevoir les corps de roulement,
- une pluralité d'éléments de maintien (20 ; 120 ; 220 ; 320 ; 420) pour maintenir les corps de roulement reçus dans les évidements, et
- au moins un élément flexible (18 ; 118 ; 218 ; 318 ; 418) allongé pour la liaison des éléments de maintien,
- la bande de support comportant deux sections de bordure (S) latérales et une section centrale (M) reliant celles-ci,
- le au moins un élément flexible étant réalisé à la manière d'un conducteur avec
- deux éléments de longeron (1 8a ; 118a ; 21 8a ; 31 8a) s'étendant dans la direction longitudinale (L) dans les deux sections de bordure de la bande porteuse et
- une pluralité d'éléments de traverse (18b ; 118b ; 218b ; 318b) reliant ces éléments de longeron dans la section centrale de la bande porteuse, et
- les éléments de maintien étant reliés à l'au moins un élément flexible dans les zones de bordure (S) latérales de la bande porteuse,
**caractérisée en ce que**
- à des corps de roulement (14 ; 114 ; 214 ; 314 ; 414) successifs sont associés des éléments de maintien (20 ; 120 ; 220 ; 320 ; 420) séparés,
- au moins un élément de maintien (20 ; 120 ; 220 ; 320 ; 420) associé à chaque corps de roulement étant prévu sur le au moins un élément flexible (18 ; 118 ; 218 ; 318 ; 418) dans sa direction longitudinale (L), devant et derrière ce corps de roulement.

2. Chaîne de corps de roulement selon la revendication 1,
**caractérisée en ce que** dans la direction longitudinale (L) du au moins un élément flexible (18 ; 118), devant et derrière au moins un corps de roulement (14 ; 114), sont prévus respectivement au moins deux éléments de maintien (20 ; 120) associés à ce corps de roulement (14; 114).

3. Chaîne de corps de roulement selon la revendication 2,
**caractérisée en ce qu'**au moins deux éléments de maintien (20c, 20c' ; 120a, 120a'), dont un (20c ; 120a) est prévu au-dessus d'un plan principal (H) de la bande de support (12 ; 112) et un (20c' ; 120a') est prévu au-dessous de ce plan principal (H), sont disposés immédiatement l'un au-dessus de l'autre ou l'un au-dessous de l'autre.

4. Chaîne de corps de roulement selon la revendication 3,
**caractérisée en ce que** les corps de roulement (14; 114) sont maintenus d'une part par la surface périphérique (16a ; 116a) de l'évidement (16 ; 116) les recevant et d'autre part par une pluralité, de préférence au moins quatre combinaisons d'éléments de maintien (20a/20a', 20b/20b', 20c/20c', 20d/20d' ; 120a/120a') qui sont disposés répartis sur le pourtour de cet évidement (16 ; 116), de préférence uniformément, et dont les surfaces de maintien (22 ; 122) s'étendent chacune au-dessus et au-dessous du plan principal (H) de la bande de support (12 ; 112).

5. Chaîne de corps de roulement selon la revendication 1,
**caractérisée en ce qu'**au moins l'un des éléments de maintien (220 ; 320) est réalisé comme anneau complet ou demi-anneau qui s'étend en arc au-dessus ou/et au-dessous d'un plan principal (H) de la bande de support (212 ; 312), d'une section de bordure (S) vers l'autre section de bordure (S).

6. Chaîne de corps de roulement selon la revendication 5,
**caractérisée en ce que** les corps de roulement (214 ; 314) dépassent à travers une ouverture (220₁ ; 320₁) de l'élément de maintien (220 ; 320), sur son côté tourné à l'opposé de sa surface de maintien (222 ; 322).

7. Chaîne de corps de roulement selon la revendication 5 ou 6,
**caractérisée en ce qu'**un demi-anneau (320), associé à un premier corps de roulement (304), et le demi-anneau (320') voisin de ce demi-anneau (320) et associé au corps de roulement (314) suivant, sont disposés sur différents côtés du plan principal (H) de la bande de support (312).

8. Chaîne de corps de roulement selon la revendication 1,
**caractérisée en ce qu'**au moins l'un des éléments de maintien (420) est réalisé comme disque complet ou demi-disque qui s'étend au-dessus ou/et au-dessous d'un plan principal (H) de la bande de support (412), entre les sections de bordure (S).

9. Chaîne de corps de roulement selon l'une des revendications 1 à 8,
**caractérisée en ce que** deux éléments de maintien (20 ; 120 ; 220 ; 320 ; 420) voisins, associés à des corps de roulement (14 ; 114 ; 214 ; 314 ; 414) successifs présentent un écartement (d) prédéterminé dans le plan principal (H) de la bande de support (12 ; 112; 212 ; 31 2 ; 412).

10. Chaîne de corps de roulement selon la revendication 9,
**caractérisée en ce que** l'écartement de deux éléments de maintien (20 ; 120 ; 220 ; 420) voisins, associés à des corps de roulement (14; 114; 214; 414) successifs, augmente (20a1, 20d1 ; 120a1, 120d1 ; 220₂ ; 420₂) lorsqu'augmente la distance par rapport au plan principal (H) de la bande de support (12 ; 112 ; 212 ; 412).

11. Chaîne de corps de roulement selon la revendication 10,
**caractérisée en ce que** l'écartement des deux éléments de maintien (20; 120) augmente de façon monotone (20a 1, 20d1 ; 120a1, 120d1 ) au moins dans une section, voisine du plan principal (H) de la bande de support (12; 112), lorsque la distance augmente par rapport au plan principal (H) de la bande de support (12 ; 112).

12. Chaîne de corps de roulement selon l'une des revendications 1 à 11,
**caractérisée en ce que** la bande de support (12 ; 112; 212 ; 312; 412) est réalisée d'une seule pièce.

13. Chaîne de corps de roulement selon l'une des revendications 1 à 12,
**caractérisée en ce que** la bande de support (12; 112; 212 ; 312 ; 412) est fabriquée dans une matière synthétique.

14. Chaîne de corps de roulement selon l'une des revendications 1 à 13,
**caractérisée en ce que** la bande de support (12 ; 112 ; 212 ; 312 ; 412) est moulée par injection.

15. Chaîne de corps de roulement selon l'une des revendications 1 à 14,
**caractérisée en ce que** les corps de roulement (14) sont des billes.
